Europäisches Patentamt

(19) European Patent Office

Office européen des brevets

(11) Publication number: **0 154 287 B1**

(12) **EUROPEAN PATENT SPECIFICATION**

(45) Date of publication of patent specification: **13.02.91**  (51) Int. Cl.⁵: **H02B 1/26**, H02B 1/28

(21) Application number: **85102111.3**

(22) Date of filing: **26.02.85**

(54) **A tight door for electric switchboards.**

(30) Priority: **27.02.84 DK 1075/84**

(43) Date of publication of application:
**11.09.85 Bulletin 85/37**

(45) Publication of the grant of the patent:
**13.02.91 Bulletin 91/07**

(84) Designated Contracting States:
**AT BE CH DE FR GB IT LI LU NL SE**

(56) References cited:
**CH-A- 607 598**
**DE-A- 1 935 444**
**FR-A- 1 140 014**
**FR-A- 1 305 237**

(73) Proprietor: **Aktieselskabet Laur. Knudsen Nordisk Elektricitets Selskab**
**Haraldsgade 53**
**DK-2100 Kopenhagen O(DK)**

(72) Inventor: **Pedersen, Kurt Flemming Lindegaard**
**Hjortespringet 1**
**DK-3400 Hillerod(DK)**

(74) Representative: **Vossius & Partner**
**Siebertstrasse 4 P.O. Box 86 07 67**
**D-8000 München 86(DE)**

## Description

The present invention relates to an enclosure for electric switchboards according to the preamble of claim 1.

Electric switchboards often comprise lockers or enclosures having compartments housing devices necessary for the distribution of electrical energy together with busbars, cables, etc. In connection with unpleasant environments, i.e. environments presenting a risk of penetration of dust or water, there is a need for a suitable tightness between the door and the frame. The basic access to a switchboard is through the doors closing the individual partitions or compartments. They are opened only at inspection, and their tightness against the frame determines the ability of dust or water to penetrate. Numerous embodiments of hinges and locking devices are known which could be used in electric switchboards with the purpose of using the door as a ripping panel, of ensuring that the door can be opened only when the components or devices remain in a suitable or predetermined condition or with the purpose that the door should remain in an adequate position when not closed.

An example of a prior art hinge is disclosed in Danish patent specification No. 114.322.

The CH-PS 607 598 discloses an enclosure comprising a door with perpendicularly bent side walls and a frame with a front surface making a frustom of a pyramide. The door is hinged to the frame and the axis of rotation of said hinge is positioned inside the side walls of the door. Along the side walls of the door sealing strips are provided for engagement with corresponding plane portions of the front surface of the frame when the door is closed. This arrangement of sealing strips and plane surfaces co-operating therewith ensures a sealing which is extremely sensitive to unevennesses in the plane frame surface, and this sensitivity can only be counteracted by the door being pressed firmly against the sealing strips at the closing, which may involve an unsuitably high load of the lock and the hinges.

As a prior art locking device one may mention a widely used thumb screw through holes in the door which coacts with the frame behind the door. The above-mentioned embodiments as well as many other embodiments belonging to the prior art are time-consuming in their mounting and use and still do not ensure either tightness or necessary flexibility when specifying the desired strength of the hinge and locking device.

It is an object of the present invention to provide an enclosure with a door, a door frame, a hinge and a locking device which eliminates the disadvantages of prior art devices and which allows for ample possibilities of changing the construction as per requirements, even after a completed mounting.

This object is achieved by a door the features of which are stated in claim 1.

In claim 2 there is specified a suitable embodiment of the hinge of the door, whereas the gasket specified in claim 3 ensures in a favourable manner the tightness of the door and the locking device specified in claim 4 a tight closure without the need for holes in the front plate of the door.

The features stated in claim 5 ensure a further tightness of the entire enclosure.

A more complete understanding of the present invention can be had by referring to the following drawings and detailed description of the invention in which:

FIG. 1    shows fragmentary views of the door according to the present invention,

FIG. 2    is a side view of the door showing the edge thereof seen from the hinge side,

FIG. 3    illustrates the operation of the hinge,

FIG. 4    illustrates the operation of the locking device, and

FIG. 5    is a fragmentary outside view of the door frame.

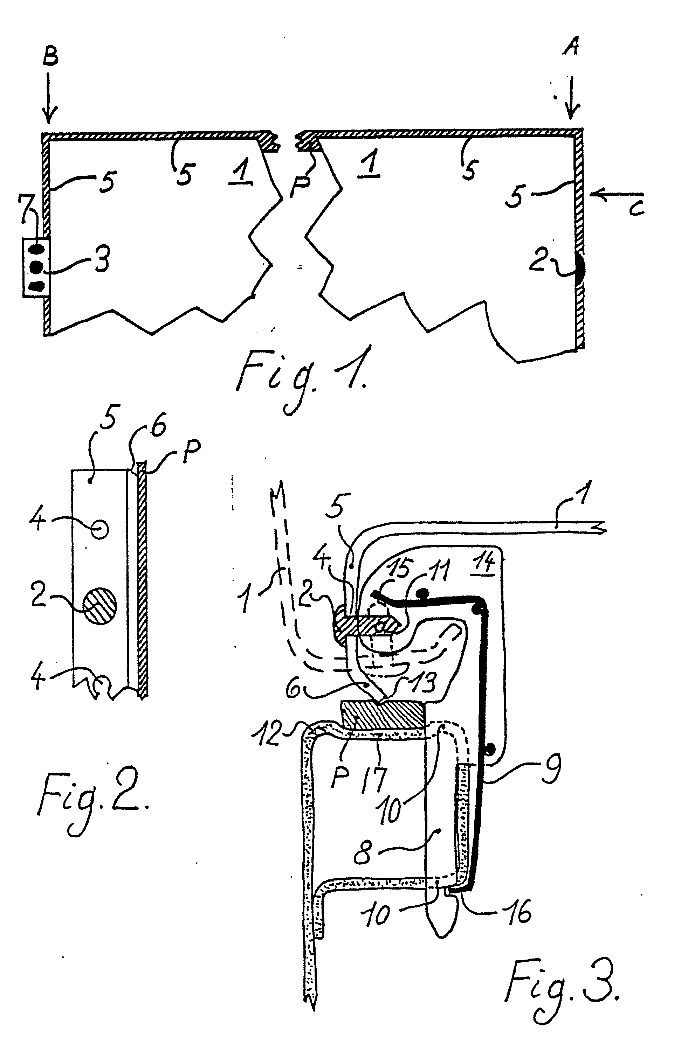

Fig. 1 is a frontal view of door 1 provided with a hinge 2 at the right hand side of the drawing and a locking device 3 at the left hand side. Only the upper left and right hand corners are shown in order to clearly identify the gasket means P. The door is provided with no holes in the frontplate thereof and the hinge as well as the locking device are covered, i.e. protected, by the door in its closed position.

FIG. 2 is a fragmentary view of the hinge side of the door 1 seen in a

direction of an arrow C in FIG. 1. It appears from this figure that the side wall 5 of the door has been provided at regular intervals with blanks 4 to be punched out thus permitting an optional location of a hinge. The door of the present invention is provided with such blanks in all four side walls which makes it possible during the mounting thereof to place the hinge at different sites in accordance with the different tasks to be undertaken.

If the door has to withstand heavy pressures ( which is a special requirement in connection with possible explosions within switchboards) a number of hinges may be mounted which number corresponds to the actual task. It is a matter of course that similarly there has to be mounted a number of locking devices corresponding to the increased requirements. It also appears from FIG. 2 that the side walls of the door include an inwardly bent portion 6. This feature is especially important for obtaining a tight enclosure in connection with the hinge of the present invention and contributes additionally to the rigidity of the door.

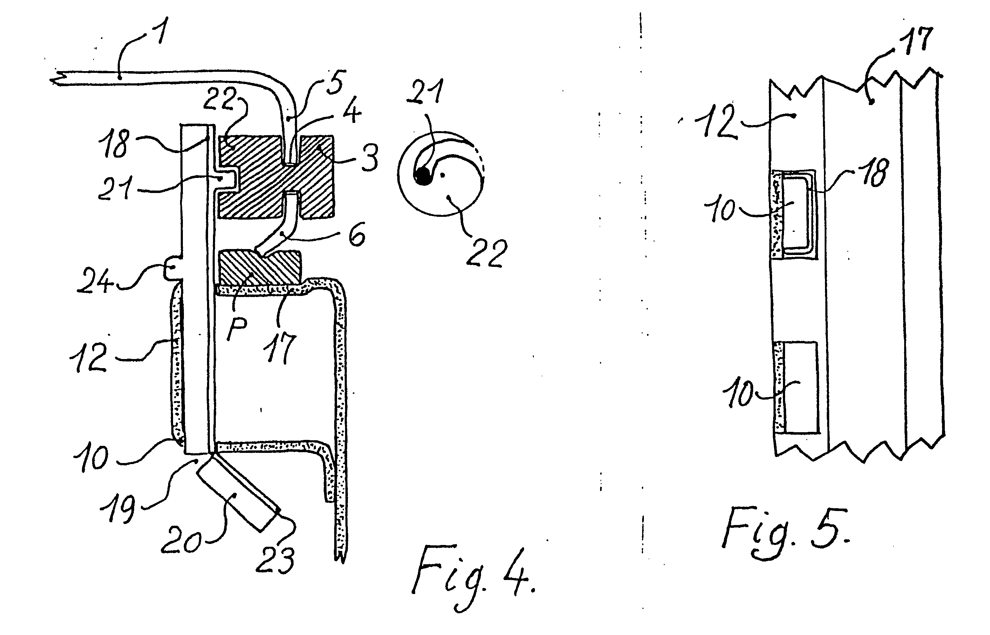

FIG. 3 illustrates the design of the hinge for the door of an enclosure according to the present invention. It shows a section through a pivot 2 and seen in the direction of an arrow A in FIG. 1. The hinge joint 14 includes two lugs which terminate in a hollow or U-shaped profile 8 which during the mounting process is put through an aperture 10 in the frame 12. The profile or terminating part 8 fits tightly into the frame but the hinge joint is also prevented from being pulled out by means of a spring means 9 one end 16 of which engages said terminating part 8. The centre of rotation of the door is represented by a rivet put through holes 11 in the pivot 2 and the two lugs of the hinge joint I4. The centre of rotation has been so positioned relative to the bent portion 6 of the side wall 5 of the door that a suitable pression is obtained in a sealing strip or gasket P provided on the frame when the door is closed. A line normal to the frame 12 and passing through the rivet in the hole 11 must pass the outer limitation 13 of the bent portion 6 of the door's side wall if a maximum pression into the gasket P is to be achieved along a line perpendicular to the plane of the drawing. It is further desirable that the door is kept in a certain position when opened as indicated by dashed lines. This is achieved by the co-operation between a cone-shaped end of the pivot 2 and an outer end of spring means 9 as indicated at position 15. Of course, the same effect may be obtained if the spring means 9 is adapted to co-act similarly with the bent portion 6 of the door side wall 5. for most applications, sufficient tightness of the door is obtained when the pivot 2 is simply run through a punched hole 4 in the side wall 5. However, a further sealing may be necessary, and this can be accomplished by means of a further gasket in the hole which gasket is compressed during the mounting of the hinge.

FIG. 4 illustrates the design of a locking device for the door of an enclosure according to the present invention. It shows a section through the device seen in a direction of an arrow B in FIG. 1. The lock fitting comprises a U-shaped member 18 put through a hole 10 in the frame 12.

The location also appears from FIG. 5 which shows the frame 12 seen from the outside and the U-shaped member placed in the upper hole (on the drawing). The lock fitting fits tightly in the hole 10 with an abutment member 24 engaging the frame. The lock fitting is fixed by an inner bent part thereof. This may be achieved in a well defined manner at the inside of the frame 12 by providing cut outs or notches 19 in the side flanges of the U-shaped member thus permitting a bending of the bottom flange 23 only.

The lock fitting comprises a locking cam 21 which, during the closing of the door, co-operates with a cam disc 22. The cam disc may be turned from the outside by turning the knob protruding from the punched hole 4 in the side wall 5 of the door 1. The turning may be carried out by means of a lever mounted in one of the holes 7 shown at the locking device 3 in FIG. 1. The cam disc is as shown provided with an Archimedes' screw. However, it is evident that also other curves may be used.

The bent part or edge 6 of the door's side wall 5 compresses the gasket P during the locking of the door thus obtaining the desired tightness.

The gasket P is positioned in a small recess 17 in the frame 12. This feature facilitates the placing of the gasket straight on the frame to ensure that the straight compression of the gasket is located centrally of the gasket.

If the door is to be provided with a number of locking devices only one operating lever may prove to be practical. Many mechanisms are available for this purpose.

By means of the door of the present invention an unknown degree of flexibility has been obtained to the conditions under which the door is to be used, in spite of the fact that it merely consists of a rectangular door provided with one type of hinge joint and one type of locking device. This is due to the fact that it in use co-operates with a frame which is provided with holes at regular intervals for the mount of hinge joints and locking devices at optional sites. These holes or blanks are all located inside the door and thus, they do not inhibit the tightnes of the door. Furthermore, it is evident that omission of the gasket P may be permitted in case flexibility is needed and not the tightness.

## Claims

1. Enclosure for an electric switchboard comprising a door, a door frame, hinge means, and a locking device, said door comprising circumferentially extending side walls bent substantially perpendicular to the main plane of the door and mounted on the door frame by means of said hinge means, where the axis of rotation of the hinge means is placed inside the circumference of the door, and where the door frame comprises a front surface opposing the door in the closed position, said front surface substantially being positioned in a common plane and being provided with sealing strips for engagement with the door when the door is closed and locked by means of a locking device (3) pulling the door towards the frame in the locking position, characterised in that

a) the edge portions (6) of the side walls (5) of the door are inwardly bent so as to slope towards the centre of the enclosure in a direction away from the door;

b) the sloping and dimension of the bent edge portions (6) of the side walls are chosen so that the free inner edge (13) of the bent edge portions (6) is pressed directly against the sealing strip (P) by a biasing force when the door is locked;

c) the bent edge portions (6) are so that a normal to the door frame through said center of rotation touches the outermost edge of the bent edge portions (6); and

d) the side walls (5) have been provided with blanks to be punched out for mounting of a hinge means (2) and a locking device.

2. Enclosure as claimed in claim 1, wherein said hinge means (2) comprises a hinge joint (14) having a hollow profiled member (8) being thrust through a hole (10) in the frame (12), a pivot (2) mounted in a punched out hole (4) in a side wall (5) of the door and a connecting rivet put through holes (11) in said hinge joint (14) and said pivot (2), the hinge means further being provided with a retaining spring member (9), which member engages the hinge joint (14) to prevent it from being pulled out and said pivot (2) to retain said door in a predetermined open position.

3. Enclosure as claimed in claim 1 or 2, in which said sealing strip (P) is of an elastomeric material having an essentially closed surface and so mounted in a small recess (17) on the frame (12) that the door, when closed, compresses said strip linearly.

4. Enclosure as claimed in any of claims 1 to 3, in which said locking device (3) comprises a lock fitting (18) consisting of a U-shaped member having a bottom (23) and two side flanges (20) provided with cut outs (19) and locking cams (21), which cams are disposed to engage a cam disc (22) during the locking operation of the door, said cam disc being operable by turning an operating means (7) mounted in a punched out hole (4) in a side wall (5) of the door, and which cut outs (19) permit a bending of said lock fitting adjacent said cut outs to retain said fitting in position after having been put through a hole (10) in said frame (12).

5. Enclosure as claimed in any of claims 1 to 4, in which additional sealing means is provided in each punched hole (4) to ensure a further tightness.

**Revendications**

1. Enceinte pour panneau de distribution électrique comprenant une porte, un dormant de porte, un moyen de charnière, et un dispositif de blocage, la porte comportant des parois latérales s'étendant circonférentiellement, cambrées en étant sensiblement perpendiculaires au plan principal de la porte et montées sur le dormant de la porte par le moyen de charnière, où l'axe de rotation du moyen de charnière est placé à l'intérieur de la circonférence de la porte, et où le dormant de la porte comprend une surface avant opposée à la porte dans la position fermée, la surface avant étant sensiblement située dans un plan commun et comportant des bandes d'étanchéité pour engagement avec la porte lorsque la porte est fermée et bloquée au moyen d'un' dispositif de blocage (3) exerçant une traction sur la porte dans la direction du dormant dans la position de blocage,
caractérisée en ce que :

a) les parties (6) des bords des parois latérales (5) de la porte sont cambrées vers l'intérieur de manière à être inclinées vers le centre de l'enceinte dans le sens allant en s'éloignant de la porte;

b) la pente et les dimensions des parties (6) cambrées des bords des parois latérales sont choisies de façon que le bord intérieur libre (13) des parties (6) cambrées des bords soit comprimé directement contre la bande d'étanchéité (P) par une force de sollicitation lorsque la porte est bloquée;

c) les parties (6) cambrées des bords sont telles qu'une perpendiculaire au dormant de la porte passant par le centre de rotation touche le bord le plus à l'extérieur des parties (6) cambrées des bords; et d) les parois latérales (5) ont été munies de parties nues devant être poinçonnées pour le montage d'un moyen de charnière (2) et d'un dispositif de blocage.

2. Enceinte selon la revendication 1, dans laquelle le moyen de charnière (2) comprend un joint (14) de charnière ayant un élément creux profilé (8) qui est poussé à travers un trou (10) ménagé dans le dormant (12), un pivot (2) monté dans un trou (4) poinçonné dans une paroi latérale (5) de la porte et un rivet de liaison placé dans des trous (11) du joint (14) de charnière et le pivot (2), le moyen de charnière comportant en outre un élément (9) de ressort de retenue, élément qui est en contact avec le joint (14) de charnière pour en empêcher l'extraction et le pivot (2) pour maintenir la porte dans une position prédéterminée d'ouverture.

3. Enceinte selon la revendication 1 ou 2, dans laquelle la bande d'étanchéité (P) est en matériau élastomère ayant une surface essentiellement fermée et montée dans un petit évidement (17) ménagé dans le dormant (12) de façon que la porte, lorsqu'elle est fermée, comprime linéairement la bande.

4. Enceinte selon l'une des revendications 1 à 3, dans laquelle le dispositif de blocage (3) comprend une ferrure (18) de verrou constituée d'un élément en forme de U ayant un fond (23) et deux flasques latéraux (20) présentant des découpes (19) et des cames de blocage (21), cames qui sont disposées de manière à venir en contact avec un disque de came (22) pendant l'opération de blocage de la porte, le disque de came pouvant être actionné en tournant un moyen d'actionnement (7) monté dans un trou (4) poinçonné dans une paroi latérale (5) de la porte, et découpes (19) qui permettent la flexion de la ferrure de verrou contigue aux découpes pour maintenir la ferrure en position après avoir été placée dans un trou (10) du dormant (12).

5. Enceinte selon l'une quelconque des revendications 1 à 4, dans laquelle un moyen supplémentaire d'étanchéité est fourni dans chaque trou poinçonné (4) de manière à assurer une nouvelle étanchéité.

**Ansprüche**

1. Gehäuse für eine elektrische Schalttafel mit einer Tür, einem Türrahmen, einer Scharniereinrichtung und einer Verriegelungsvorrichtung, wobei die Tür sich über ihren Umfang erstreckende Seitenwände aufweist, die im wesentlichen senkrecht zur Hauptebene der Tür angeordnet und am Türrahmen mittels der Scharniereinrichtung befestigt sind, die Drehachse der Scharniereinrichtung innerhalb des Türumfangs angeordnet ist, der Türrahmen eine Vorderfläche aufweist, die der Tür in geschlossener Position gegenübersteht und die Vorderfläche im wesentlichen in einer gemeinsamen Ebene mit Dichtstreifen für den Eingriff mit der Tür versehen ist, wenn die Tür geschlossen ist und durch eine Verriegelungsvorrichtung (3) verriegelt ist, die die Tür in der Verriegelungsposition in Richtung auf den Rahmen zieht, dadurch gekennzeichnet, daß

a) die Kantenabschnitte (6) der Türseitenwände (5) nach innen gebogen sind, so daß sie in Richtung auf das Zentrum des Gehäuses von der Tür weg abgeschrägt sind;

b) die Abschrägung und Dimension der gebogenen Kantenabschnitte (6) der Seitenwände so gewählt sind, daß die freie innere Kante (13) der gebogenen Kantenabschnitte (6) direkt durch eine anliegende Kraft gegen den Dichtungsstreifen (P) gepreßt wird, wenn die Tür verriegelt ist;

c) die gebogenen Kantenabschnitte (6) so ausgebildet sind, daß eine auf dem Türrahmen senkrechte Linie durch das Drehzentrum hindurch die äußerste Kante der gebogenen Kantenabschnitte (6) berührt; und

d) die Seitenwände (5) mit ausgestanzten Löchern versehen sind, um eine Scharniereinrichtung (2) und eine Verriegelungsvorrichtung zu befestigen.

2. Gehäuse nach Anspruch 1, wobei die Scharniereinrichtung (2) aufweist: eine Gelenkverbindung (14) mit einem Hohlprofilglied (8), das durch ein Loch (10) im Rahmen (12) geschoben wird, einen Drehzapfen (2), der in einem ausgestanzten Loch (4) in einer Türseitenwand (5) befestigt ist, und ein Verbindungsglied, das durch die Löcher (11) in der Gelenkverbindung (14) und dem Drehzapfen (2) gesteckt ist, wobei die Scharniereinrichtung ferner mit einem Rückhaltefederglied (9) versehen ist, die mit der Gelenkverbindung (14) in Eingriff steht, um zu verhindern, daß sie herausgezogen wird, und mit dem Drehzapfen (2) in Eingriff steht, um die Tür in einer vorbestimmten Öffnungsposition zu halten.

3. Gehäuse nach Anspruch 1 oder 2, wobei der Dichtungsstreifen (P) aus einem elastischen Polymer besteht, das eine im wesentlichen geschlossene Oberfläche aufweist und in einer kleinen Vertiefung (17) am Rahmen (12) so befestigt ist, daß die Tür, wenn sie geschlossen ist, den Streifen linear zusammendrückt.

4. Gehäuse nach einem der Ansprüche 1 bis 3, wobei die Verriegelungsvorrichtung (3) ein Verriegelungsanschlußstück (18) aufweist, das aus einem U-förmigen Glied mit einem Boden (23) und zwei Seitenflanschen (20) besteht, die mit Ausschnitten (19) und Verriegelungsnocken (21) versehen sind, wobei die Nocken angeordnet sind, um in eine Nockenscheibe (22) während der Verriegelung der Tür einzugreifen, und die Nockenscheibe durch Drehen einer Bedienungseinrichtung (7), die in einem ausgestanzten Loch (4) in einer Türseitenwand (5) befestigt ist, betätigt werden kann, und wobei die Ausschnitte (19) eine Biegung des Verriegelungsanschlußstücks, das an die Ausschnitte angrenzt, gestatten, um das Anschlußstück in seiner Position zu halten, nachdem es durch ein Loch (10) im Rahmen (12) gesteckt wurde.

5. Gehäuse nach einem der Ansprüche 1 bis 4, wobei eine zusätzliche Verschlußeinrichtung in jedem ausgestanzten Loch (4) vorgesehen ist, um eine weitere Abdichtung zu gewährleisten.

Fig. 1.

Fig. 2.

Fig. 3.

7

Fig. 4.

Fig. 5.

EP 0 154 287 B1